# EUROPEAN PATENT SPECIFICATION

(11) **EP 0 626 300 B1**
(45) Date of publication and mention of the grant of the patent: **29.10.1997**
(21) Application number: 94201395.4
(22) Date of filing: 18.05.1994
(51) Int. Cl.: B62B 1/26

(54) **Cart for the collection of rubbish in general and its transportation over uneven terrain, particularly suitable for use in gardening**
Wagen zum Sammeln von Abfall und zum Transportieren über unebenen Boden, vor allem geeignet im Gartenbau
Chariot pour le ramassage de déchets et son transport sur un terrain accidenté, specialement adapté pour le jardinage

(30) Priority: 25.05.1993 IT MI930434 U
(43) Date of publication of application: 30.11.1994
(73) Proprietor: CLABER S.P.A., I-33080 Fiume Veneto Pordenone (IT)
(72) Inventor: Roman, Gianfranco, I-33087 Pasiano (Pordenone) (IT)
(74) Representative: Mittler, Enrico

(56) References cited:
- EP-A- 0 525 868
- WO-A-92/14638
- GB-A- 2 078 633
- US-A- 4 452 468
- US-A- 5 209 517

## Description

The present invention relates to a cart for the collection of rubbish in general and its transportation over uneven terrain, particularly suitable for use in gardening.

In the British patent No. 2177895 in the name of CLABER S.p.A. there is described a cart for the collection and transportation of leaves and rubbish in general constituted by two parts, that can be joined together by means of two connection joints, forming a tubular supporting structure, wherein the upper part forms an operating handle and has a ring for coupling a collection bag, while to the lower one there is fastened, by means of clamps, the common shaft of a pair of wheels.

A similar device is disclosed in GB-A-2 078 633.

In a similar sector, represented by devices for winding up irrigation hoses, the tendency has been developing to provide structures comprising a central supporting part, usually made in plastic material, to which tubular elements are coupled constituting handles or grips and supporting bases.

In the European patent application No. 0 525 868 there is described a supporting side for a hose-winding drum of a device for winding flexible hose, provided with seats for the introduction of ends of handle and base elements, and a snap coupling for a shaft supporting a pair of wheels.

The use of such sides for making rubbish-carrying carts as well appears to be of considerable interest, as it allows a reduction in design costs.

However, due to the type of coupling of the shaft supporting the wheels, the use on uneven terrain, such as for example stone surfaces, can cause the shaft itself to come out of its seat and the consequent detachment of one or both wheels and the possibility of the rubbish container to tip over.

In view of the described state of the art, the object of the present invention is to provide a rubbish-carrying cart that uses the same solutions adopted for hose-winding devices, without, however, exhibiting the mentioned drawbacks.

According to the present invention, such object is attained thanks to a cart for the collection band transportation of rubbish in general, as defined in claim 1.

In a preferred embodiment, said bag coupling ring is provided with a cover that can be tipped over, having a shape such that its centre of gravity rotates correspondingly going from one side to the other of its axis of rotation, so as to obtain a stable open position.

Thanks to the present invention, it is possible to obtain a reliable rubbish cart, that exploits solutions common with products of similar sectors, allowing a substantial reduction in design efforts.

These and other features of the present invention will be made more evident by the following detailed description of an embodiment thereof, illustrated as a non-limiting example in the enclosed drawings, wherein:
Fig. 1 shows a side view of a cart according to the invention provided with a cover;
Fig. 2 shows a front view of said cart;
Fig. 3 shows a supporting side of the abovementioned cart;
Fig. 4 is a partially-sectioned view from left of the side of Fig. 3;
Fig. 5 is a rear view of the side of Fig. 3;
Fig. 6 shows the detail of a through hole for the insertion of a shaft for supporting a pair of wheels, in a cross-sectional view taken along the line VI-VI of Fig. 3;
Fig. 7 shows said detail in a cross-sectional view taken along the line VII-VII of Fig. 6;
Fig. 8 is similar to Fig. 7, but with said shaft inserted in said through hole;
Fig. 9 is a cross-sectional view taken along the line IX-IX of Fig. 8.

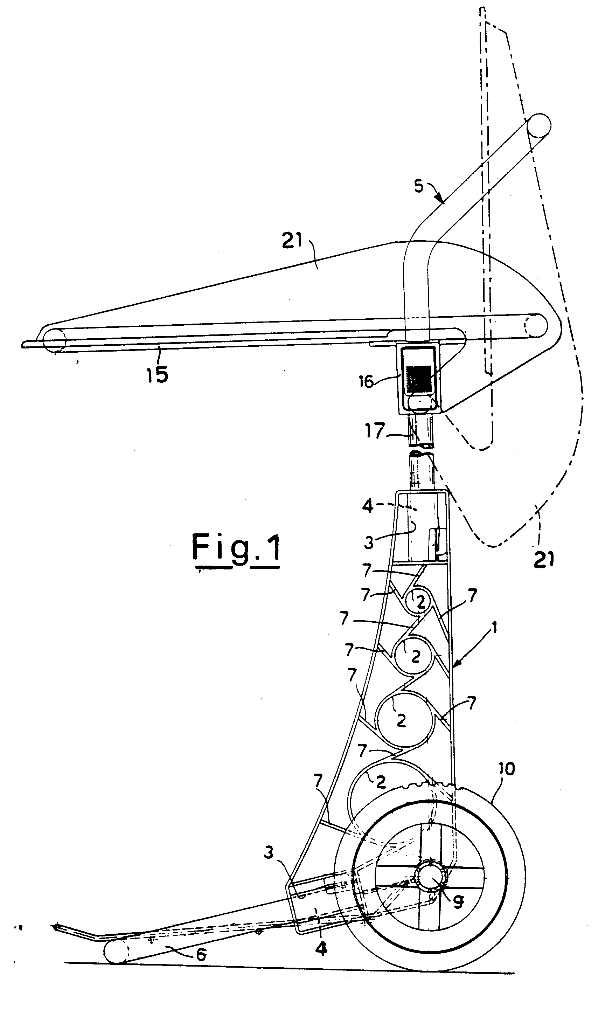

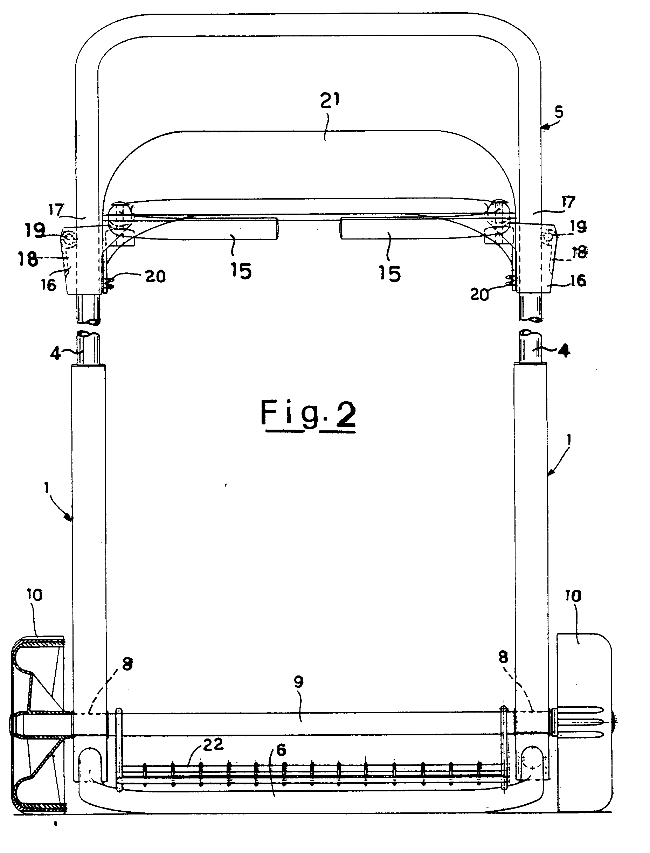

With reference to Figs. 1 and 2, a rubbish-carrying cart according to the invention comprises a pair of supporting sides 1, made of plastic material, each provided with a pair of seats 3 wherein there are inserted the ends 4 of an upper tubular element 5, constituting an operating handle, and those of a lower tubular element 6, constituting on the other hand a supporting base.

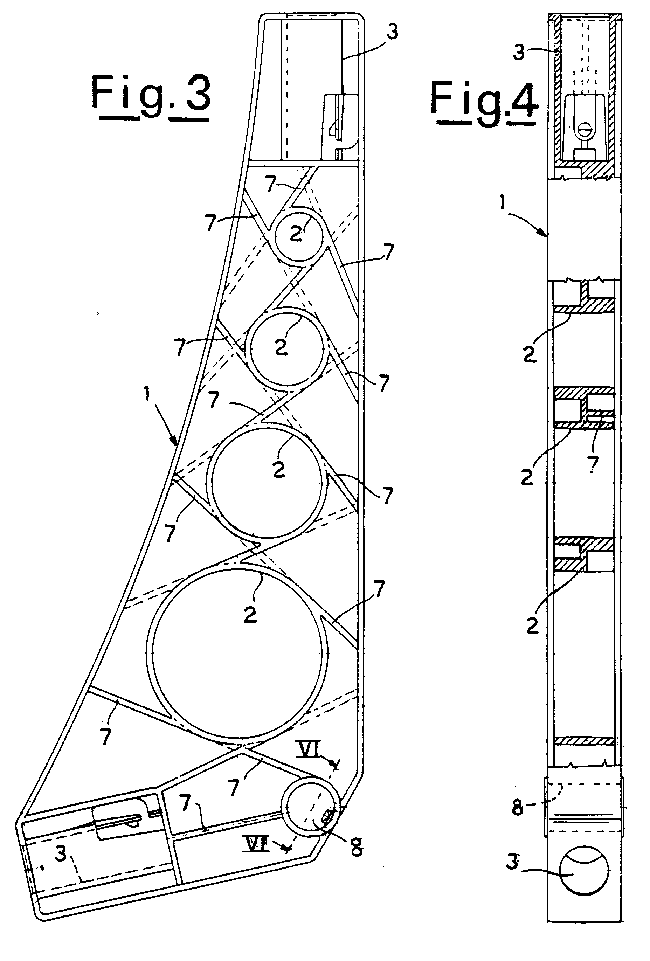

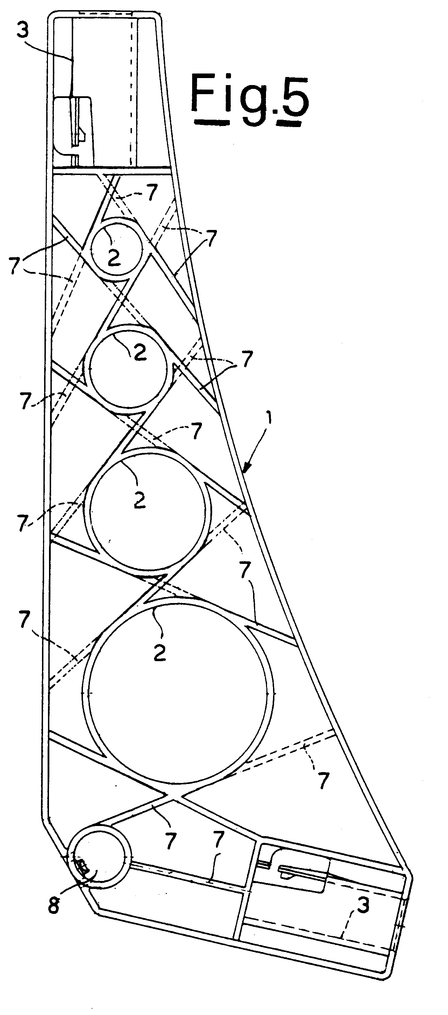

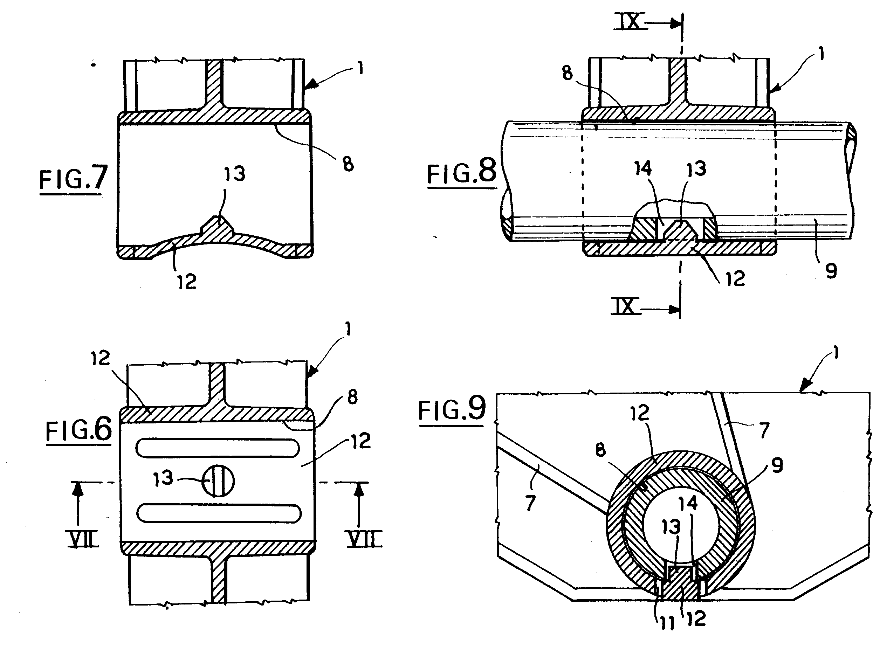

As shown in Figs. 3, 4 and 5, the sides 1 are also provided with a succession of lightening holes 2 and with reinforcing ribs 7, and with a through hole 8 suitable for the insertion of a shaft 9 for supporting a pair of wheels 10; on the inner wall of said through hole 8 there are obtained, along the axis of the hole itself, a pair of slits 11 (Fig. 6), defining an elastic lamina 12 connected to the wall of the through hole 8 only at its ends. Said lamina is normally arched towards the axis of the hole 8 (Fig. 7), and, in the proximity of its mid-point, it has a pin 13. The shaft 9 is in turn provided with a slit 14 wherein the pin 13 can insert itself (Figs. 8 and 9), so as to prevent its axial sliding movement.

A coupling ring 15 for a collection bag (not shown in the drawings) is coupled to said upper tubular element 5 by means of a pair of sleeves sliding vertically along two vertical sections 17 of the latter. On each of said sleeves there is hinged a lever 18, provided with a cam 19 co-operating with the wall of said vertical sections 17 so as to prevent the sliding movement of the sleeves 16.

Each of the sleeves 16 is also provided, on the internal wall, with a pin 20 on which there is slidingly coupled a tip-over cover 21. In the lowered position the cover 21 rests up against said ring 15 (as shown in Fig. 1 with a continuous line, and in Fig. 2), while when it is opened the centre of gravity rotates on the axis constituted by the two pins 20, and allows the cover 21 to remain in the vertical position (as shown with a dashed and dotted line in Fig. 1); in this position, the handle 5 acts as a stop to prevent the further rotation of the cover 21.

A square basket-like element 22 is lastly coupled to the shaft 9, and rests on part of the supporting base 6 for supporting the collection bag when this is filled up.

## Claims

1. Cart for the collection and transportation of rubbish in general, comprising an upper tubular element (5) and a lower tubular element (6) forming an operating handle and a supporting base, respectively, a coupling ring (15) for a collection bag mechanically coupled to said upper tubular element (5), and a pair of supporting sides (1), each provided with a pair of seats (3) suitable for allowing the introduction and the clamping of the ends (4) of said upper (5) and lower (6) tubular elements, characterized in that each supporting side (1) is provided with a succession of lightening holes (2) and reinforcing ribs (7) and with a through hole (8) for the insertion and the clamping of a shaft (9) for supporting a pair of wheels (10), and said coupling ring (15) of the bag is coupled to the upper tubular element (5) by means of a pair of sleeves (16) that can slide vertically along vertical rectilinear sections (17) of the latter's, so as to be able to adjust the distance of the ring (15) itself from the supporting base (6) to accept collection bags having a variable height.

2. Cart according to claim 1, characterized in that inside said through hole (8) of each supporting side (1) there is a pin (13) suitable for inserting itself in a corresponding slit (14) obtained in said supporting shaft (9) so as to prevent the latter's axial sliding movement.

3. Cart according to claim 1, characterized in that each of said sleeves (16) is provided with a lever (18) rotatable and integral with a cam (19) co-operating with the wall of said vertical sections (17) to prevent the sliding movement of the sleeves (16) themselves.

4. Cart according to claim 1, characterized in that said bag coupling ring (15) is provided with a cover (21) that can be tipped over, having a shape such that its centre of gravity rotates correspondingly going from one side to the other of its axis of rotation, so as to obtain a stable open position.

## Patentansprüche

1. Wagen zum Sammeln und Transportieren von Abfall allgemein, welcher ein oberes, rohrförmiges Element (5) und ein unteres, rohrförmiges Element (6) aufweist, welche einen Bedienungshebel und eine Tragbasis bzw. ein Grundgestell jeweils bilden, wobei ein Verbindungsring (15) zum mechanischen Verbinden eines Sammelbeutels mit dem oberen, rohrförmigen Element (5), und ein Paar von Tragseiten (1) vorgesehen sind, die jeweils mit einem Paar von Sitzen (3) zum Einführen und Einspannen der Enden (4) der oberen (5) und der unteren (6) rohrförmigen Elemente versehen ist, **dadurch gekennzeichnet,** daß jede Tragseite (1) mit einer Folge von Erleichterungsöffnungen (2) und Versteifungsrippen (7) sowie mit einer Durchgangsöffnung (8) zum Einführen und Lagern einer Welle (9) versehen ist, welche ein Räderpaar (10) trägt, und daß der Verbindungsring (15) des Beutels mit dem oberen, rohrförmigen Element mittels einem Paar von Hülsen (16) verbunden ist, welche eine Gleitbewegung in vertikaler Richtung entlang den vertikalen viereckförmigen Abschnitten (17) desselben ausführen können, so daß der Abstand des Rings selbst von der Tragbasis (6) zur Aufnahme von Sammelbeuteln unterschiedlicher Höhe einstellbar ist.

2. Wagen nach Anspruch 1, **dadurch gekennzeichnet,** daß im Inneren der Durchgangsöffnung (8) der jeweiligen Tragseite (1) ein Bolzen (13) vorgesehen ist, welcher in geeigneter Weise selbst in einen zugeordneten Schlitz (14) einführbar ist, welcher in der Tragachse (9) vorgesehen ist, um eine axiale Gleitbewegung desselben zu verhindern.

3. Wagen nach Anspruch 1, **dadurch gekennzeichnet,** daß jede Hülse (16) mit einem Hebel (18) versehen ist, welcher drehbar und integral mit einer Nocke (19) vorgesehen ist, die mit der Wand des vertikalen Abschnittes (17) zusammenarbeitet, um eine Gleitbewegung der Hülse (16) selbst zu verhindern.

4. Wagen nach Anspruch 1, **dadurch gekennzeichnet,** daß der Beutel-Verbindungsring (15) mit einer Abdeckung (21) versehen ist, welche übergekippt werden kann, und welche eine derartige Gestalt hat, daß der Schwerpunkt eine entsprechende Drehbewegung von einer Seite zu der anderen der Drehachse derart ausführen kann, daß man eine stabile Offenposition erhält.

## Revendications

1. Chariot pour le ramassage et le transport de déchets en général, comprenant un élément tubulaire supérieur (5) et un élément tubulaire inférieur (6) qui forment respectivement une poignée de manoeuvre et une base d'appui, un cercle de fixation (15) pour un sac collecteur, accouplé mécaniquement audit élément tubulaire supérieur (5), et une paire de flancs supports (1), dont chacun est muni d'une paire de logements (3) appropriés pour permettre d'introduire et de serrer les extrémités (4) desdits éléments tubulaires supérieur (5) et inférieur (6), caractérisé en ce que chaque flanc de support (1) est muni d'une succession de trous d'allégement (2) et de nervures de renforcement (7), et d'un trou traversant (8) destiné à l'insertion et au serrage d'un arbre (9) destiné à supporter une paire de roues (10), et ledit cercle de fixation (15) du sac est accouplé à l'élément tubulaire supérieur (5) au moyen d'une paire de manchons (16) qui peuvent coulisser verticalement le long de sections rectilignes verticales (17) de ce dernier, de manière à pouvoir régler la distance du cercle (15) à la base d'appui (6) pour accepter des sacs collecteurs de hauteur variable.

2. Chariot selon la revendication 1, caractérisé en ce qu'à l'intérieur dudit trou traversant (8) de chaque flanc support (1), se trouve un ergot (13) approprié pour s'insérer dans une fente correspondante (14) ménagée dans ledit arbre de support (9) pour empêcher le mouvement de coulissement axial de ce dernier.

3. Chariot selon la revendication 1, caractérisé en ce que chacun desdits manchons (16) est muni d'un levier (18) qu'on peut faire tourner et qui est d'une seule pièce avec une came (19) coopérant avec la paroi desdites sections verticales (17) pour prévenir le mouvement de coulissement des manchons (16).

4. Chariot selon la revendication 1, caractérisé en ce que ledit cercle (15) de fixation du sac est muni d'un couvercle (21) qu'on peut basculer et qui possède une forme telle que son centre de gravité tourne de façon correspondante pour passer d'un côté à l'autre de son axe de rotation, de manière à prendre une position ouverte stable.
